(19) Europäisches Patentamt
European Patent Office
Office européen des brevets

(11) **EP 4 641 455 A1**

(12) **EUROPEAN PATENT APPLICATION**
published in accordance with Art. 153(4) EPC

(43) Date of publication:
**29.10.2025 Bulletin 2025/44**

(51) International Patent Classification (IPC):
**G06N 99/00** (2019.01)     **G06N 10/60** (2022.01)
**G06N 20/00** (2019.01)

(21) Application number: **22969209.0**

(22) Date of filing: **22.12.2022**

(52) Cooperative Patent Classification (CPC):
**G06N 10/60; G06N 20/00; G06N 99/00**

(86) International application number:
**PCT/JP2022/047324**

(87) International publication number:
**WO 2024/134823 (27.06.2024 Gazette 2024/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **FUJITSU LIMITED**
**Kawasaki-shi, Kanagawa 211-8588 (JP)**

(72) Inventor: **TAKAHASHI, Norihiko**
**Kawasaki-shi, Kanagawa 211-8588 (JP)**

(74) Representative: **Haseltine Lake Kempner LLP**
**Cheapside House**
**138 Cheapside**
**London EC2V 6BJ (GB)**

(54) **INFORMATION PROCESSING PROGRAM, INFORMATION PROCESSING METHOD, AND INFORMATION PROCESSING DEVICE**

(57)     To shorten the time of variational quantum eigenvalue computation.

For each of a plurality of update processes, in which a value of a first parameter that is applied to a variational quantum circuit (1) used for variational quantum eigenvalue computation is updated, an information processing apparatus (10) determines a value of a second parameter used in the update process to be larger in (n+1)-th and subsequent update processes than in n-th and earlier update processes. The information processing apparatus (10) determines, for each update process, a value of a third parameter so as to periodically change between a value higher than a predetermined reference value and a value lower than the predetermined reference value with an increase in an update count that indicates an ordinal number of the update process and have a greater amount of change as the value of the second parameter becomes larger. Then, the information processing apparatus (10) updates the value of the first parameter to a value changed from the value of the first parameter before update by an amount of change corresponding to the value of the third parameter determined for the update count.

FIG. 1

## Description

Technical Field

The embodiments discussed herein relate to an information processing program, an information processing method, and an information processing apparatus.

Background Art

A variational quantum eigenvalue algorithm is known as a method for performing quantum chemical computation using a quantum computer or simulator. A variational quantum eigensolver (VQE) using this algorithm is also known. The VQE algorithm is used, for example, to obtain an energy value of the ground state of a substance.

In quantum chemical computation by the VQE algorithm (VQE computation), for example, a quantum computer measures expectation values of quantum states based on a variational quantum circuit parameterized by a plurality of parameters $\theta$. From the expectation values of the quantum states, an expectation value of energy is obtained. The expectation value of energy is the sum of energy (total energy value) calculated for each qubit. Hereinafter, unless otherwise specified, the energy value refers to the total energy value.

A classical computer adjusts the parameters $\theta$ based on the expectation values of the quantum states so that the energy becomes lower. This adjustment processing of the parameters $\theta$ is referred to as an optimization process. The quantum computer generates quantum states using the optimized parameters $\theta$ and measures the expectation values again. The quantum computer and the classical computer repeat the measurement of the expectation values of the quantum states and the optimization of the parameters until the energy converges.

As a technique related to VQE, there is, for example, a disclosed quantum variational method for obtaining optimal variational parameters of a ground state wavefunction for a Hamiltonian system. In addition, there are disclosed techniques regarding an interactive scale VQE process. Further, there is a disclosed technique of accelerating the VQE by receiving a qubit Hamiltonian representing a linear combination of a plurality of Pauli strings.

Citation List

Patent Literature

Patent Literature 1: Japanese National Publication of International Patent Application No. 2022-529187
Patent Literature 2: U.S. Patent Application Publication No. 2022/0188381
Patent Literature 3: U.S. Patent Application Publication No. 2022/0171828

Summary of Invention

Technical Problem

In the VQE computation, if an amount of change in the values of the parameters $\theta$ in each optimization process is too large, the values of the parameters $\theta$ may greatly deviate from an ideal transition progression (optimization path) for reaching the energy minimum value, and the energy may fail to converge correctly. Therefore, in the related art, the optimization process is performed by sufficiently reducing the amount of change in the values of the parameters $\theta$ in each optimization process. However, when the amount of change in the values of the parameters $\theta$ in each optimization process is small, the energy decreases only little by little, and the number of iterations of the process until convergence increases. Therefore, the time needed for the VQE computation is prolonged.

One aspect aims to reduce the time for variational quantum eigenvalue computation.

Solution to Problem

According to an aspect of the embodiments, there is provided an information processing program causing a computer to execute a plurality of update processes, in each of which a value of a first parameter that is applied to a variational quantum circuit used for variational quantum eigenvalue computation is updated, in the following procedure.

The computer determines, for each of the plurality of update processes, a value of a second parameter used in the each of the plurality of update processes to be larger in (n+1)-th and subsequent update processes (n is a natural number) than in n-th and earlier update processes. The computer determines, for the each of the plurality of update processes, a value of a third parameter used in the each of the plurality of update processes so as to periodically change between a value higher than a predetermined reference value and a value lower than the predetermined reference value with an increase in an update count that indicates an ordinal number of the each of the plurality of update processes among the plurality of update processes and have a greater amount of change as the value of the second parameter becomes larger. Then, the computer updates the value of the first parameter to a value changed from the value of the first parameter before update by an amount of change corresponding to the value of the third parameter determined for the update count indicating the each of the plurality of update processes.

Advantageous Effects of Invention

According to one aspect, VQE computation time is reduced.

The above and other objects, features and advantages of the present invention will become apparent from the following description taken in conjunction with the accompanying drawings which illustrate, by way of example, preferred embodiments of the invention.

Brief Description of Drawings

FIG. 1 illustrates an example of an information processing method according to a first embodiment.
FIG. 2 illustrates an example of a system configuration according to a second embodiment.
FIG. 3 illustrates an example of hardware of a classical computer.
FIG. 4 illustrates an example of a variational quantum circuit.
FIG. 5 is a block diagram illustrating an example of functions of the classical computer for VQE computation.
FIG. 6 is a flowchart illustrating an example of a procedure of a VQE computation process.
FIG. 7 illustrates an example of VQE computation of energy of a hydrogen molecule.
FIG. 8 illustrates an example of changes of step size.
FIG. 9 illustrates an example of a change schedule of a parameter m.
FIG. 10 is a flowchart illustrating a procedure of VQE computation according to a third embodiment.
FIG. 11 is a first half of a flowchart illustrating a procedure of VQE computation according to a fourth embodiment.
FIG. 12 is a second half of the flowchart illustrating the procedure of the VQE computation according to the fourth embodiment.
FIG. 13 illustrates an example of energy transition in a case where energy greatly deviates from an ideal transition progression.

Description of Embodiments

Hereinafter, embodiments are described with reference to the drawings. These embodiments may be combined with each other unless they have contradictory features.

First Embodiment

A first embodiment is an information processing method that reduces the number of iterations of optimization by accelerating the convergence of energy in variational quantum eigenvalue computation, thereby shortening the computation time.

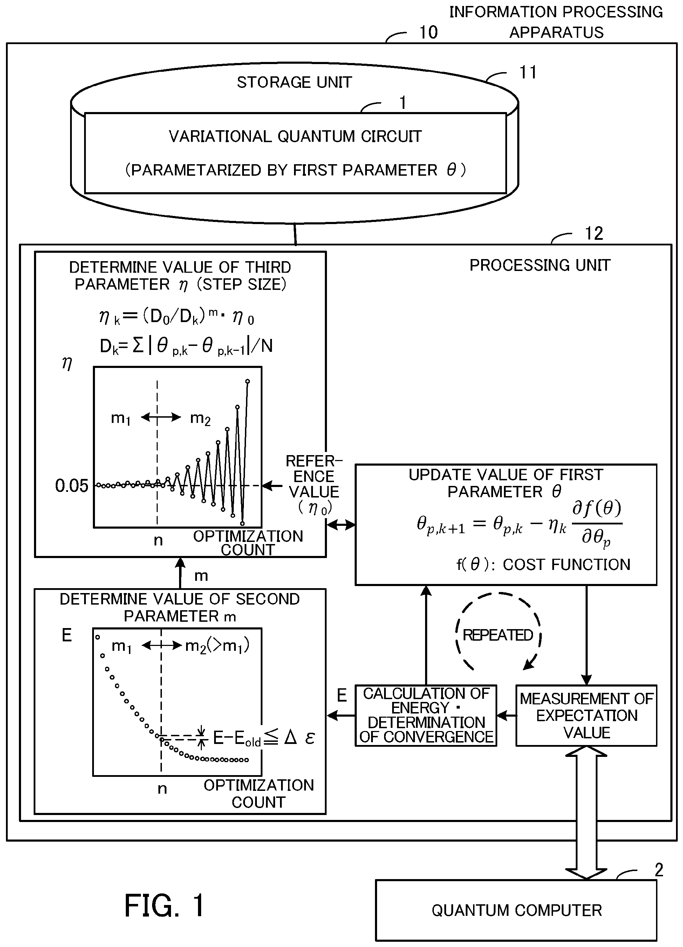

FIG. 1 illustrates an example of an information processing method according to the first embodiment. FIG. 1 depicts an information processing apparatus 10 that performs the information processing method. The information processing apparatus 10 is able to implement the information processing method by executing, for example, an information processing program.

The information processing apparatus 10 includes a storage unit 11 and a processing unit 12. The storage unit 11 is, for example, a memory or a storage device included in the information processing apparatus 10. The processing unit 12 is, for example, a processor or an arithmetic circuit included in the information processing apparatus 10.

The storage unit 11 stores a variational quantum circuit 1 corresponding to a quantum multibody system to be solved by variational quantum eigenvalue computation. The variational quantum circuit 1 is parameterized by, for example, a set of a plurality of parameters $(\theta_1, \theta_2, \cdots)$. Hereinafter, the set of a plurality of parameters is referred to as a first parameter $\theta$.

The processing unit 12 performs variational quantum eigenvalue computation. In the variational quantum eigenvalue computation, the processing unit 12 uses, for example, a quantum computer 2 to measure expectation values of quantum states by the variational quantum circuit 1 to which the value of the parameters at that time is applied. The processing unit 12 calculates the energy of the quantum multibody system based on the expectation values of the quantum states. The processing unit 12 determines whether the calculated energy satisfies a predetermined convergence condition, and updates the value of the first parameter θ in a direction in which the energy decreases when the calculated energy does not satisfy the predetermined convergence condition. Such updating of the value of the first parameter θ is referred to as parameter optimization. The processing unit 12 repeatedly executes the expectation value measurement using the quantum computer 2 and the parameter optimization a plurality of times until the energy satisfies the convergence condition.

In such variational quantum eigenvalue computation, the processing unit 12 determines the value of a second parameter m used in the update process of the value of the first parameter θ to be a larger value in (n+1)-th and subsequent update processes (n is a natural number) than in n-th and previous update processes. The second parameter m is a parameter for expanding or reducing the amplitude of increase or decrease in periodically increasing or decreasing a third parameter η which adjusts the amount of change in the first parameter θ during updating.

For example, the processing unit 12 compares a change amount "E - $E_{old}$" of an energy value "E" corresponding to the value of the first parameter θ calculated in the n-th update process from a previous energy value "$E_{old}$" with a predetermined threshold "Δε". When "E - $E_{old} \leq$ Δε" is satisfied, the processing unit 12 determines a value "$m_2$" of the second parameter m to be used in the (n+1)-th update process to be a value larger than a value "$m_1$" of the second parameter m used in the n-th update process ($m_2 > m_1$) ($m_1$ and $m_2$ are positive real numbers).

With the progress of the variational quantum eigenvalue computation, the processing unit 12 dynamically changes the third parameter η for adjusting the degree of changing the value of the first parameter θ in the parameter optimization. The third parameter η may also be referred to as a step size. The third parameter η is, for example, a learning rate in a gradient descent method.

For example, the processing unit 12 determines the value of the third parameter η used in the update process of the value of the first parameter θ applied to the variational quantum circuit 1 to be a value that periodically changes between a value higher than a predetermined reference value "$η_0$" and a value lower than the predetermined reference value "$η_0$" with an increase in an update count that indicates an ordinal number of the update process. Hereinafter, the update count of the value of the first parameter θ is referred to as the optimization count.

In determining the value of the third parameter η, the processing unit 12 determines the value of the third parameter η to be a value having a greater amount of change as the value of the second parameter m becomes larger. When the optimization count is k (k is a natural number), the value of the third parameter η is determined for each value of the optimization count k.

In the example of FIG. 1, the reference value "$η_0$" is "0.05". As the optimization count increases, the value of the third parameter η corresponding to each optimization count periodically changes between a value higher than "0.05" and a value lower than "0.05". The change cycle of the value of the third parameter η may be, for example, one cycle with a fixed optimization count. In the example of FIG. 1, two update processes constitute one cycle. In this case, a value higher than the reference value "$η_0$" and a value lower than the reference value "η0" are alternately repeated every time the optimization count increases by one.

The value of the second parameter m is "$m_1$" in the update process up to the n-th time, and the value of the second parameter m is "$m_2$" in the (n+1)-th and subsequent update processes. Therefore, in the (n+1)-th and subsequent update processes, the amount of change in the value of the third parameter η is larger than that in the case where the value of the second parameter m is kept at "$m_1$".

The processing unit 12 is able to dynamically calculate the value of the third parameter η for each update process during the progression of the variational quantum eigenvalue computation. For example, when a k-th update process of the value of the first parameter θ is performed during the progression of the variational quantum eigenvalue computation, the processing unit 12 calculates the value of the third parameter η to be used in a (k+1)-th update process based on the amount of change in the value of the first parameter θ in the k-th update process.

The amount of change in the value of the first parameter θ is, for example, an average value of change amounts of values of the plurality of parameters ($θ_1$, $θ_2$, $\cdots$) included in the first parameter θ. The amount of change in the value of the first parameter θ in the k-th update process is expressed as, for example, "$D_k = Σ|θ_{p,k} - θ_{p,k-1}|/N$" ($θ_{p,k}$ is the value of a p-th parameter in the optimization count k, and N is the number of parameters). "$|θ_{p,k} - θ_{p,k-1}|$" is the amount of change in the value of the parameter in the k-th update process (the difference between the values of the parameter before and after the update). A value "$η_k$" of the third parameter η to be used in the (k+1)-th update process is represented by, for example, "$η_k = (D_0/D_k)^m \cdot η_0$" ($D_0$ is a predetermined real number).

The processing unit 12 determines the amount of change in the value of the parameter based on the value of the third parameter η determined for the count of the update process to be executed (the optimization count) among a plurality of update processes repeatedly executed in the progression of the variational quantum eigenvalue computation. For example, the processing unit 12 increases the amount of change in the value of the parameter as the value of the third parameter η increases. Then, the processing unit 12 updates the value of the parameter to a value changed from the value of the parameter before the update by the determined amount of change.

For example, the processing unit 12 determines, as the amount of change, the product "$\eta_k(\partial f(\theta)/\partial \theta_p)$" of the gradient of the cost function ($f(\theta)$) and the value of the third parameter $\eta$, in which the value of the third parameter $\eta$ corresponds to the value of the parameter before the update. The cost function is, for example, a function whose value decreases as the energy of the quantum multibody system to be solved decreases.

In this way, by dynamically changing the third parameter $\eta$ for each update process of the first parameter $\theta$ of the variational quantum eigenvalue computation, it is possible to reduce the number of iterations of optimization by converging the energy early. That is, when the value of the third parameter $\eta$ is too large, the value of the parameter changes too much in one update process, and there is a possibility that the optimization is not successful. On the other hand, when the value of the third parameter $\eta$ is too small, the amount of change in the value of the parameter becomes too small, and the number of repetitive processes including the update processes increases. The processing unit 12 periodically changes the value of the third parameter $\eta$ to a value larger than the reference value "$\eta_0$" and a value smaller than the reference value "$\eta_0$". As a result, when the value of the third parameter $\eta$ becomes a value larger than the reference value "$\eta_0$", the convergence of the energy is accelerated, which reduces the number of repetitive processes (including the optimization of the first parameter $\theta$ and the expectation value measurement). In addition, the update process with the value of the third parameter $\eta$ set to a value smaller than the reference value "$\eta_0$" is interposed within one cycle, which prevents a situation where the amount of change in the value of the first parameter $\theta$ is large from continuing, and it is therefore possible to suppress a large deviation from the optimization path of the first parameter $\theta$.

In addition, the value of the second parameter m for each update process is larger in the (n+1)-th and subsequent update processes than in the n-th and previous update processes. Thus, in the (n+1)-th and subsequent update processes, the change in the value of the third parameter $\eta$ increases, and as a result, the amount of change in the first parameter $\theta$ also increases. The increase in the amount of change of the first parameter $\theta$ converges the energy early, which in turn shortens the time needed for the variational quantum eigenvalue computation.

In addition, since the value of the second parameter m is suppressed to a value that is not too large up to the n-th update process, the amount of change in the value of the third parameter $\eta$ is suppressed to be small while the amount of change in the energy obtained by the variational quantum eigenvalue computation is large, like immediately after the start of the variational quantum eigenvalue computation. As a result, the third parameter $\eta$ is prevented from becoming an excessively large value at an early stage of the variational quantum eigenvalue computation, and the energy value is prevented from greatly deviating from the ideal transition progression due to an excessive change in the first parameter $\theta$.

The processing unit 12 obtains the value of the third parameter $\eta$ by the following calculation, for example. The processing unit 12 exponentiates a numerical value ($D_0/D_k$), which decreases as the change in the first parameter $\theta$ in the update process of the first parameter $\theta$ increases, with the value of the second parameter m as an exponent. Then, the processing unit 12 multiplies the result of the exponentiation by the reference value "$\eta_0$" to obtain the product ($(D_0/D_k)^m \cdot \eta_0$), which is determined as the value "$\eta_k$" of the third parameter $\eta$. Accordingly, the processing unit 12 is able to adjust the amount of change in the value of the third parameter $\eta$ by changing the magnitude of the value of the second parameter m.

The processing unit 12 is able to determine the value of the second parameter m according to the amount of change in the energy in the variational quantum eigenvalue computation. For example, the processing unit 12 increases the value of the second parameter m when the amount of change in the value of the energy corresponding to the value of the first parameter $\theta$ calculated in the n-th update process from the previous time is equal to or less than a predetermined threshold value. That is, the processing unit 12 determines the value of the second parameter m used in the (n+1)-th update process to be a value larger than the value of the second parameter m used in the n-th update process. As a result, the value of the second parameter m increases after the amount of change in the energy decreases to such an extent that the energy does not greatly deviate from the ideal transition progression even when the value of the second parameter m is increased. Thus, the energy is prevented from greatly deviating from the ideal transition progression after the value of the second parameter m is changed to a large value.

The processing unit 12 is also able to gradually increase the value of the second parameter m according to a predefined schedule. For example, schedule data is prepared in advance, in which values of the second parameter m are mapped to step numbers respectively indicating the ordinal number of each update process of the first parameter $\theta$. The schedule data is stored in the storage unit 11. Then, according to the ordinal number of the update process to be executed next, the processing unit 12 determines the value of the second parameter m used in the next update process.

If the value of the second parameter m is increased too early or the amount of the increase is too large, the energy may rapidly increase after the value of the second parameter m is increased, and the energy may greatly deviate from the ideal transition progression. Therefore, when the energy greatly deviates from the ideal transition progression, the processing unit 12 may reduce the value of the second parameter m to prevent the variational quantum eigenvalue computation from ending without convergence.

For example, when the energy value calculated by the variational quantum eigenvalue computation according to the value of the first parameter $\theta$ updated in the (n+1)-th or subsequent update process has increased by a predetermined value or more from the previous time, the processing unit 12 determines that the energy has greatly deviated from the ideal transition progression. When determining that the energy has greatly deviated from the ideal transition progression, the processing unit 12 determines the value of the second parameter m to be a value "$m_3$" that is larger than the value "$m_1$" used in the n-th and earlier update processes but smaller than the value "$m_2$" used in the (n+1)-th and subsequent update processes. This allows the energy to be directed towards convergence.

If the energy increases so much that the energy deviates significantly from the ideal transition progression, it is not easy to cause the energy to converge from that state. Therefore, when the energy greatly deviates from the ideal transition progression, the processing unit 12 redoes the variational quantum eigenvalue computation from the state before the deviation. For example, the processing unit 12 determines whether the energy value obtained by the variational quantum eigenvalue computation, to which the value of the first parameter $\theta$ updated in an r-th update process (r is an integer larger than n) after the (n+1)-th update process is applied, is increased by a predetermined value or more from the energy value obtained in (r-1)-th variational quantum eigenvalue computation. When the energy value is increased by the predetermined value or more, the processing unit 12 determines the value of the third parameter $\eta$ to be used in an (r+1)-th update process based on the value of the first parameter $\theta$ updated in the (r-1)-th update process. As a result, even if the energy greatly deviates from the ideal transition progression, the processing unit 12 is able to redo the variational quantum eigenvalue computation from the state before the deviation. This allows the energy to converge early.

Second Embodiment

A second embodiment is directed to accelerating energy convergence in variational quantum eigenvalue computation using a quantum computer, to thereby reduce the time for the variational quantum eigenvalue computation. In the second embodiment, variational quantum eigenvalues are calculated by VQE. In addition, in the second embodiment, a process of updating the values of the set of a plurality of parameters $\theta$ to reduce the energy of a quantum multibody system is referred to as an optimization process. The number of times the optimization process is performed during the progression of the VQE computation (the update count in the first embodiment) is referred to as an optimization count. A parameter for adjusting the amount of change in the set of a plurality of parameters $\theta$ in the optimization process (the third parameter in the first embodiment) is referred to as a step size $\eta$.

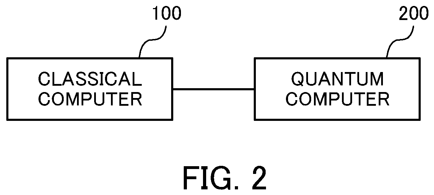

FIG. 2 illustrates an example of a system configuration according to the second embodiment. A classical computer 100 and a quantum computer 200 are connected via a network. The classical computer 100 is a von Neumann computer. The classical computer 100 performs processing such as optimization calculation of parameters in VQE computation. The quantum computer 200 is a quantum gate-based quantum computer that performs desired calculation by operating states of qubits based on a quantum circuit. In the VQE computation, the quantum computer 200 obtains, based on a variational quantum circuit, expectation values of the quantum states indicated by the variational quantum circuit according to values of designated parameters.

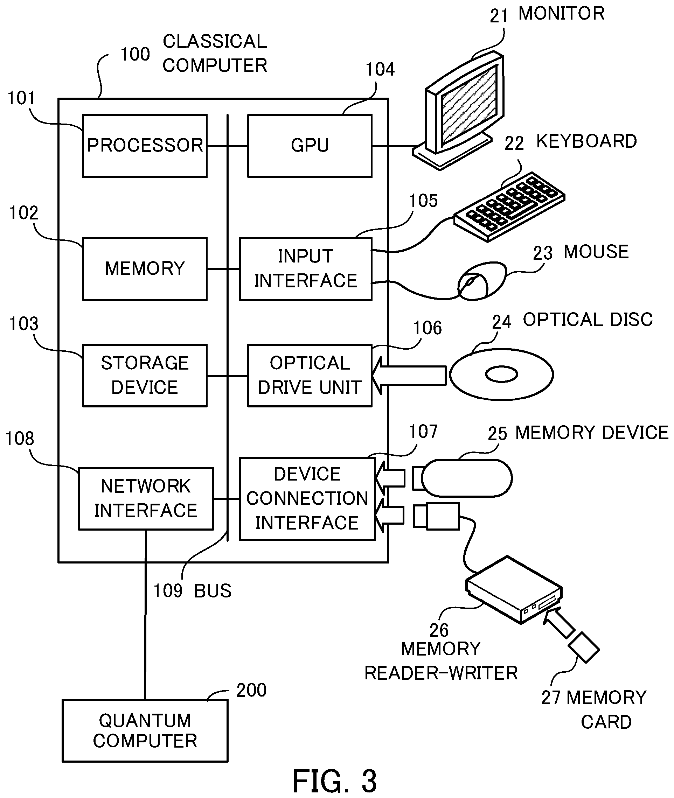

FIG. 3 illustrates an example of hardware of a classical computer. The entire classical computer 100 is controlled by a processor 101. A memory 102 and a plurality of peripheral devices are connected to the processor 101 via a bus 109. The processor 101 may be a multiprocessor. The processor 101 is, for example, a central processing unit (CPU), a micro processing unit (MPU), or a digital signal processor (DSP). At least a part of functions realized by the processor 101 executing a program may be realized by an electronic circuit, such as an application specific integrated circuit (ASIC) or a programmable logic device (PLD).

The memory 102 is used as a main storage device of the classical computer 100. The memory 102 temporarily stores at least part of an operating system (OS) program and application programs to be executed by the processor 101. The memory 102 also stores various data used for processing by the processor 101. As the memory 102, for example, a volatile semiconductor storage device, such as a random access memory (RAM), is used.

The peripheral devices connected to the bus 109 include a storage device 103, a graphics processing unit (GPU) 104, an input interface 105, an optical drive unit 106, a device connection interface 107, and a network interface 108.

The storage device 103 electrically or magnetically writes and reads data to and from a built-in recording medium. The storage device 103 is used as an auxiliary storage device of the classical computer 100. The storage device 103 stores OS programs, application programs, and various data. As the storage device 103, for example, a hard disk drive (HDD) or a solid state drive (SSD) may be used.

The GPU 104 is an arithmetic unit that performs image processing, and is also called a graphic controller. A monitor 21 is connected to the GPU 104. The GPU 104 displays an image on the screen of the monitor 21 in accordance with an instruction from the processor 101. Examples of the monitor 21 include a display device using organic electro luminescence (EL) and a liquid crystal display device.

A keyboard 22 and a mouse 23 are connected to the input interface 105. The input interface 105 transmits signals sent from the keyboard 22 and the mouse 23 to the processor 101. The mouse 23 is an example of a pointing device, and other pointing devices may be used. Examples of other pointing devices include a touch panel, a tablet, a touch pad, and a track ball.

The optical drive unit 106 reads data recorded on an optical disc 24 or writes data to the optical disc 24 using laser light or the like. The optical disc 24 is a portable recording medium on which data is recorded so as to be readable by reflection of light. The optical disc 24 may be a digital versatile disc (DVD), a DVD-RAM, a compact disc read-only memory (CD-ROM), a CD-recordable (CD-R), a CD-rewritable (CD-RW), or the like.

The device connection interface 107 is a communication interface for connecting peripheral devices to the classical computer 100. For example, a memory device 25 and a memory reader-writer 26 may be connected to the device connection interface 107. The memory device 25 is a recording medium having a function of communicating with the device connection interface 107. The memory reader-writer 26 is a device that writes data to a memory card 27 or reads data from the memory card 27. The memory card 27 is a card-type recording medium.

The network interface 108 is connected to the quantum computer 200 via a network. The network interface 108 transmits information, such as a request for quantum computation, to the quantum computer 200, and receives information indicating computation results from the quantum computer 200. The network interface 108 is a wired communication interface connected to a wired communication device, such as a switch or a router, via a cable.

The classical computer 100 may realize processing functions of the second embodiment by the hardware as described above. The apparatus described in the first embodiment may also be realized by hardware similar to that of the classical computer 100 depicted in FIG. 3.

The classical computer 100 realizes the processing functions of the second embodiment by executing a program recorded in a computer-readable recording medium, for example. The program describing processing contents to be executed by the classical computer 100 may be recorded in various recording media. For example, a program to be executed by the classical computer 100 may be stored in the storage device 103. The processor 101 loads at least a part of the program in the storage device 103 into the memory 102 and executes the program. The program to be executed by the classical computer 100 may be recorded in a portable recording medium such as the optical disc 24, the memory device 25, or the memory card 27. The program stored in the portable recording medium becomes executable after being installed in the storage device 103 under the control of the processor 101, for example. Alternatively, the processor 101 may read the program directly from the portable recording medium and execute the program.

In the above system, the classical computer 100 and the quantum computer 200 execute the VQE computation in cooperation with each other. The set of a plurality of parameters $\theta$ is used in a variational quantum circuit for the VQE computation.

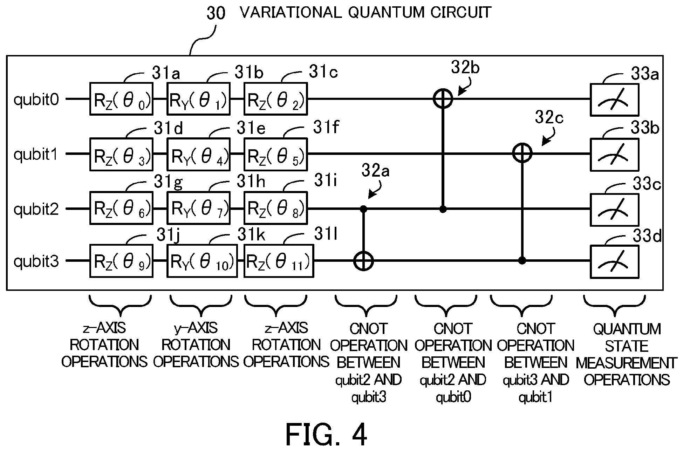

FIG. 4 illustrates an example of a variational quantum circuit. FIG. 4 depicts an example of a variational quantum circuit 30 for obtaining the ground value of the energy of a hydrogen molecule. In the variational quantum circuit 30, operations on four qubits (qubits 0 to 3) are indicated. On a horizontal line associated with each qubit, gate operations on the qubit are indicated. When the quantum computer 200 performs quantum computation, the gate operations set for each qubit are executed in order from the left.

1-qubit gates 31a to 31l are quantum gates, each of which performs a rotation operation around a predetermined axis by a designated angle. The variational quantum circuit 30 indicates that a rotation operation around a z axis, a rotation operation around a y axis, and a rotation operation around the z axis are sequentially executed on each qubit.

The rotation angles of the 1-qubit gates 31a to 31l are indicated by a set of a plurality of parameters $\theta$ ($\theta = \{\theta_1, \theta_2, \cdots\}$). The rotation angles of the 1-qubit gates 31a to 31c acting on the first qubit (qubit0) are $\theta_0$, $\theta_1$, and $\theta_2$, respectively. The rotation angles of the 1-qubit gates 31d to 31f acting on the second qubit (qubit1) are $\theta_3$, $\theta_4$, and $\theta_5$, respectively. The rotation angles of the 1-qubit gates 31g to 31i acting on the third qubit (qubit2) are $\theta_6$, $\theta_7$, and $\theta_8$, respectively. The rotation angles of the 1-qubit gates 31j to 31l acting on the fourth qubit (qubit3) are $\theta_9$, $\theta_{10}$, and $\theta_{11}$, respectively.

After the rotation operations around the predetermined axes, gate operations of 2-qubit gates 32a, 32b, and 32c are performed. The 2-qubit gate 32a is a CNOT gate indicating a CNOT operation between the third and fourth qubits. In this CNOT gate, the third qubit is a control qubit and the fourth qubit is a target qubit. The 2-qubit gate 32b is a CNOT gate indicating a CNOT operation between the third and first qubits. In this CNOT gate, the third qubit is a control qubit and the first qubit is a target qubit. The 2-qubit gate 32c is a CNOT gate indicating a CNOT operation between the fourth and second qubits. In this CNOT gate, the fourth qubit is a control qubit and the second qubit is a target qubit.

Symbols 33a to 33d depicted at the right ends of the lines corresponding to the individual qubits each indicate a measurement operation of the quantum state.

When the VQE computation is performed using the above-described variational quantum circuit 30, for example, a gradient is used in optimization of the set of a plurality of parameters (parameters $\theta$). Here, the value of a p-th parameter $\theta p$ (p is a natural number) in a k-th optimization process (k is a natural number) is denoted by $\theta p, k$. For example, $\theta p, k+1$ in a (k+1)-th optimization process may be calculated by Equation (1) below using $\theta p, k$.

$$\theta_{p,k+1} = \theta_{p,k} - \eta \frac{\partial f(\theta)}{\partial \theta_p} \qquad (1)$$

$\eta$ is a parameter (step size) for determining a weight of a numerical value to be updated in one optimization process. $\eta$ is also referred to as a learning rate. f($\theta$) is a cost function representing energy. $\partial f(\theta)/\partial p$ is the gradient of the parameter $\theta p$ in an axial direction. The gradient is partial derivative coefficients with respect to the parameter $\theta p$ at points $(\theta_{1,k}, \theta_{2,k}, \cdots)$ of f($\theta$).

In the example of Equation (1), optimization is performed with the value of the step size $\eta$ fixed. However, for example, in a case where the $\eta$ value is too large especially at an initial stage of optimization, the value of the parameters $\theta$ is changed too much in one optimization process, and there is a possibility that the optimization is not successfully performed due to deviation from an optimization path to be originally followed. In addition, when the value of $\eta$ is too small especially at the final stage of optimization, the amount of change in the value of the parameters $\theta$ may be underestimated, and the optimization count may increase.

Therefore, in the optimization in the VQE computation, the classical computer 100 changes the value of the step size $\eta$ for each optimization process as indicated by Equations (2) and (3).

$$\theta_{p,k+1} = \theta_{p,k} - \eta_k \frac{\partial f(\theta)}{\partial \theta_p} \qquad (2)$$

$$\eta_k = \left(\frac{D_0}{D_k}\right)^m \cdot \eta_0 \qquad (3)$$

Here, "$\eta_k$" is a real number indicating the step size $\eta$ in the k-th optimization process. "$D_0$" is a predefined constant (real number). "$D_k$" is an average value of change amounts of the parameter $\theta p$ in the parameters $\theta$ in the k-th optimization process. "$D_k$" is obtained according to Equation (4).

$$D_k = \sum_{p}^{N} \frac{\left|\theta_{p,k} - \theta_{p,k-1}\right|}{N} \qquad (4)$$

Here, N is the number of parameters $\theta p$ (N is a natural number). The value of the parameter m in Equation (3) is a predefined constant (real number). The value of the parameter m is dynamically updated so that the number of iterations of optimization is as small as possible. For example, the classical computer 100 increases the value of the parameter m when the amount of change in the energy with the progress of the VQE computation is equal to or less than a certain level. As the value of the parameter m increases, the step size $\eta$ increases.

The classical computer 100 is able to accelerate convergence of the energy and reduce the number of iterations by dynamically changing the step size $\eta$ according to Equations (3) and (4). Moreover, the classical computer 100 uses the parameter m to increase the amplitude, by which the step size $\eta$ is increased or decreased, when the amount of change in the energy per step has decreased. This further accelerates the convergence of the energy and shortens the VQE computation time.

For example, in a case where the parameter m, which determines the degree of expansion or reduction of the amplitude for increasing or decreasing the step size $\eta$, is set to a fixed value, the VQE computation is repeatedly performed, and an optimal value of m is set in advance. For example, when the value of m is 0.6, the effect of reducing the number of steps until the energy converges is maximized. Here, if a value larger than 0.6 (for example, m = 0.7) is used as the value of m in order to further increase the step size $\eta$ and further reduce the number of iterations of optimization, the step size $\eta$ becomes too large, and the value of the parameters $\theta$ deviates from the optimization path in the middle of the VQE computation. As a result, appropriate optimization becomes difficult, and the VQE computation does not converge. This is because the change in the energy per step is generally large in the initial stage of optimization.

A large change in the energy per step means that a change in the energy value is sensitive to a change in the value of the parameters $\theta$. As indicated in Equation (2), the degree of change in the value of the parameters $\theta$ depends on the step size $\eta$. As indicated in Equation (3), the step size $\eta$ increases as the parameter m increases. If the value of the parameter m is too large, the step size $\eta$ becomes too large, and the total energy deviates from the optimization path.

Therefore, the classical computer 100 does not set the value of the parameter m used to control the magnitude of the amplitude of the step size $\eta$ to a fixed value, but performs the optimization calculation while changing the value of the parameter m. Accordingly, the classical computer 100 is able to flexibly adjust the step size $\eta$, which allows to further reduce the number of iterations of optimization.

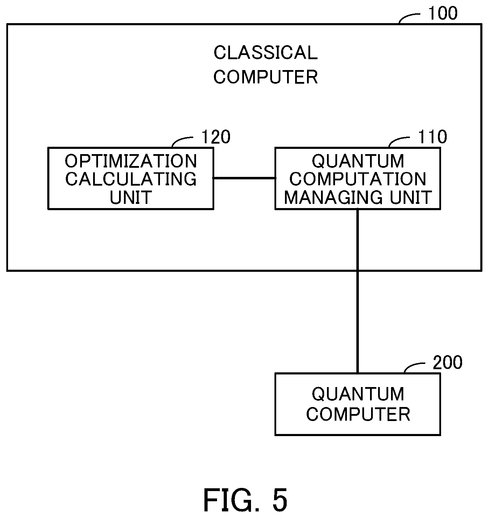

FIG. 5 is a block diagram illustrating an example of functions of a classical computer for VQE computation. The classical computer 100 includes a quantum computation managing unit 110 and an optimization calculating unit 120.

The quantum computation managing unit 110 generates a variational quantum circuit for calculating energy of a quantum multibody system such as a molecule, and instructs the quantum computer 200 to perform energy computation based on the variational quantum circuit. For example, the quantum computation managing unit 110 generates a variational quantum circuit for quantum chemical computation and sets the parameters $\theta$ related to gate operations at quantum gates in the variational quantum circuit. The quantum computation managing unit 110 sets the parameters $\theta$ to an initial value prior to the first energy computation based on the variational quantum circuit. The initial value of each parameter included in the parameters $\theta$ is, for example, a value designated in advance by a user. A random value may be used as the initial value of each parameter.

The quantum computation managing unit 110 acquires, from the quantum computer 200, computation results of the energy based on the variational quantum circuit parameterized by the parameters $\theta$). When the calculation results of the energy are acquired, the quantum computation managing unit 110 determines whether the energy has converged. If the energy has not converged, the quantum computation managing unit 110 instructs the optimization calculating unit 120 to optimize the parameters $\theta$.

The optimization calculating unit 120 optimizes the parameter $\theta$ in each optimization process. For example, the optimization calculating unit 120 updates the value of the parameters $\theta$ in a direction in which the energy value decreases. When the optimization calculation is completed, the optimization calculating unit 120 notifies the quantum computation managing unit 110 of the updated value of the parameters $\theta$.

The function of each element illustrated in FIG. 5 may be realized by causing a computer to execute a program module corresponding to the element, for example.

Next, the optimization process of the parameters $\theta$ by the optimization calculating unit 120 is described in detail. The optimization calculating unit 120 uses a smaller value "$m_1$" of the parameter m at the initial stage of optimization of the parameters $\theta$. Then, the optimization calculating unit 120 uses a larger value "$m_2$" of the parameter m in the final stage of the optimization. In order to realize this, for example, the optimization calculating unit 120 executes the following processing.

For example, when the value of the parameter m in one VQE computation of an $H_2$ molecule is set to a fixed value and the VQE computation is performed with various parameter m, it is confirmed that the maximum effect of reducing the number of iterations is obtained by using the value of m = 0.6. Therefore, the optimization calculating unit 120 uses, for example, a value of m = 0.6 until a certain step in the initial stage of parameter optimization. Then, the optimization calculating unit 120 uses a value of "m > 0.6" (for example, m = 0.7) after the certain step.

As described above, if the parameter m is made too large at the initial stage of optimization, the step size $\eta$ also becomes too large, so that the value of the parameters $\theta$ may deviate from the optimization path. On the other hand, if the optimization progresses to some extent and the change in energy becomes small, the value of the parameters $\theta$ is less likely to deviate from the optimization path. In other words, if the change in the energy becomes insensitive to the change in the value of the parameters $\theta$, the value of the parameters $\theta$ is less likely to deviate from the optimization path even if the step size $\eta$ is increased. If the step size $\eta$ is increased, the convergence of the energy is promoted accordingly. Therefore, the number of iterations of optimization is reduced.

For example, the optimization calculating unit 120 determines the timing at which the value of the parameter m is changed during optimization as follows. The optimization calculating unit 120 advances the optimization calculation at m = 0.6, and changes the value of the parameter m to, for example, m = 0.7 when the amount of change between the energy in a certain step and the energy in the immediately preceding step becomes equal to or less than a certain threshold $\Delta\varepsilon$. In this way, the optimization calculating unit 120 is able to reduce the number of iterations of optimization by appropriately determining the value of the parameter m and the threshold $\Delta\varepsilon$.

Next, the procedure of the VQE computation process is described in detail.

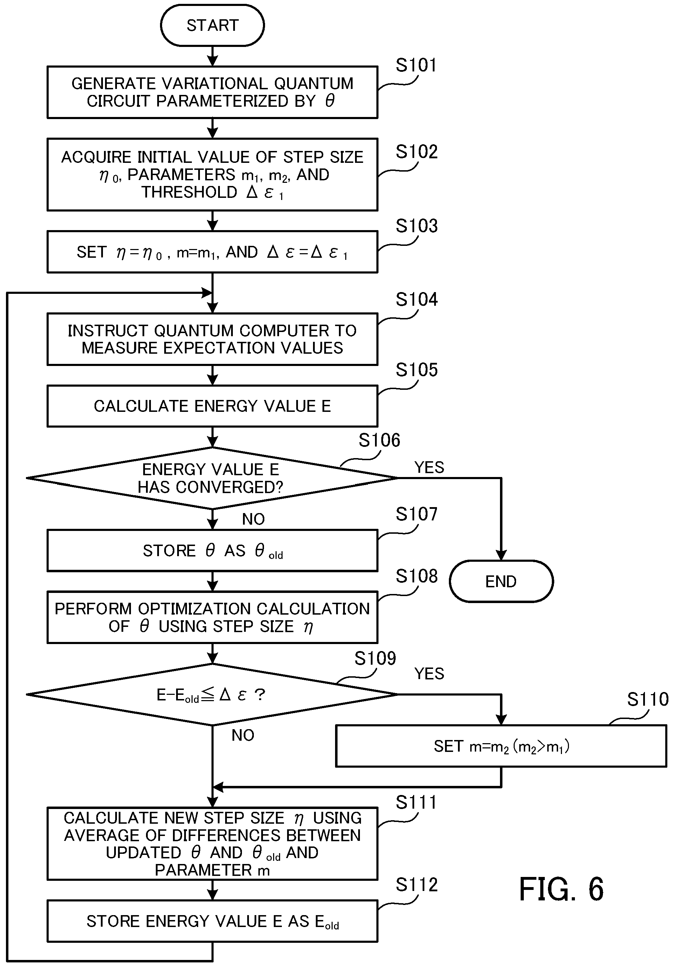

FIG. 6 is a flowchart illustrating an example of a procedure of a VQE computation process. Hereinafter, the process illustrated in FIG. 6 is described in order of step numbers.

[Step S101] The quantum computation managing unit 110 generates a variational quantum circuit parameterized by a set of a plurality of parameters (parameters $\theta = \{\theta_1, \theta_2, \cdots\}$). The quantum computation managing unit 110 uses, for example, a value designated in advance as an initial value of the set of a plurality of parameters $\theta$. [Step S102] The quantum computation managing unit 110 acquires an initial value "$\eta_0$" of the step size $\eta$ used for parameter optimization. The quantum computation managing unit 110 also acquires the values "$m_1, m_2$" of the parameter m for controlling the magnitude of the amplitude of the step size and a threshold "$\Delta\varepsilon_1$". For example, the quantum computation managing unit 110 receives an input of the values "$m_1, m_2$" of the parameter m and the threshold "$\Delta\varepsilon_1$" by the user. The quantum computation managing unit 110 transmits the acquired values "$m_1, m_2$" of the parameter m and threshold "$\Delta\varepsilon_1$" to the optimization calculating unit 120. The optimization calculating unit 120 stores the values "$m_1, m_2$" of the parameter m and the threshold "$\Delta\varepsilon_1$".

[Step S103] The quantum computation managing unit 110 sets the step size $\eta$ to the initial value $\eta_0$. The quantum computation managing unit 110 also sets the parameter m to the initial value "$m_1$". Further, the quantum computation managing unit 110 sets the threshold $\Delta\varepsilon$ to the initial value "$\Delta\varepsilon_1$".

[Step S104] The quantum computation managing unit 110 instructs the quantum computer 200 to measure expectation values. For example, the quantum computation managing unit 110 transmits the generated variational quantum circuit and the value of the parameters $\theta$ to the quantum computer 200, and instructs the quantum computer 200 to calculate the expectation value of each qubit based on the variational quantum circuit. The quantum computer 200 measures the expectation values of the qubits based on the variational quantum circuit parameterized by the parameters $\theta$.

[Step S105] The quantum computation managing unit 110 calculates energy. For example, the quantum computation managing unit 110 calculates a value of a cost function $f(\theta)$ representing energy, and sets calculation results as an energy value E.

[Step S106] The quantum computation managing unit 110 determines whether the energy value E has converged. When the energy value E satisfies a predetermined convergence condition, the quantum computation managing unit 110 determines that the energy value has converged. For example, the quantum computation managing unit 110 determines that the energy value E has converged if the energy value E has reached a value known as the energy value of the ground state. The quantum computation managing unit 110 may determine that the energy has converged when the difference between the energy value E calculated this time and the energy value E calculated last time is equal to or less than a predetermined threshold (a value smaller than $\Delta\varepsilon_1$).

When the energy has converged, the quantum computation managing unit 110 outputs a solution corresponding to the states of the qubits at that time, and ends the VQE computation process. If the energy has not converged, the quantum computation managing unit 110 advances the process to step S107.

[Step S107] The quantum computation managing unit 110 stores the set of a plurality of parameters $\theta$ as $\theta_{old}$ in the memory 102.

[Step S108] The optimization calculating unit 120 performs optimization calculation of the set of a plurality of parameters $\theta$ using the previously calculated step size $\eta$. For example, the optimization calculating unit 120 performs calculation represented by Equation (2). In the first optimization calculation process, the optimization calculating unit 120 uses the predefined initial value $\eta_0$ of the step size $\eta$ as the step size $\eta$ to be applied. The optimization calculating unit 120 updates the value of the parameter $\theta$ to the value obtained by the optimization calculation.

[Step S109] The optimization calculating unit 120 determines whether the difference between the energy values E and $E_{old}$ is equal to or less than the threshold $\Delta\varepsilon$ ($E - E_{old} \leq \Delta\varepsilon$). If the difference is equal to or less than the threshold $\Delta\varepsilon$, the optimization calculating unit 120 advances the process to step S110. If the difference is larger than the threshold $\Delta\varepsilon$, the optimization calculating unit 120 advances the process to step S111.

[Step S110] The optimization calculating unit 120 sets the value of the parameter m to "$m_2$" where $m_2 > m_1$ (m = $m_2$). If the value of the parameter m is already "$m_2$", the optimization calculating unit 120 does not change the value of the parameter m.

[Step S111] The optimization calculating unit 120 calculates a new step size $\eta$ based on the average value "$D_k$" of the differences between the updated parameters $\theta$ and $\theta_{old}$ and the value of the parameter m. The calculated step size $\eta$ is used in the next optimization calculation.

[Step S112] The optimization calculating unit 120 stores the energy values E as $E_{old}$. Thereafter, the optimization calculating unit 120 advances the process to step S104.

By performing the above VQE computation process, the classical computer 100 is able to dynamically change the step size $\eta$ for each optimization calculation and accelerate convergence of the energy. Moreover, when the change in the energy in one step of optimization is reduced to the threshold value $\Delta\varepsilon$, the amount of change in the step size $\eta$ increases. As a result, the convergence of the energy is further accelerated.

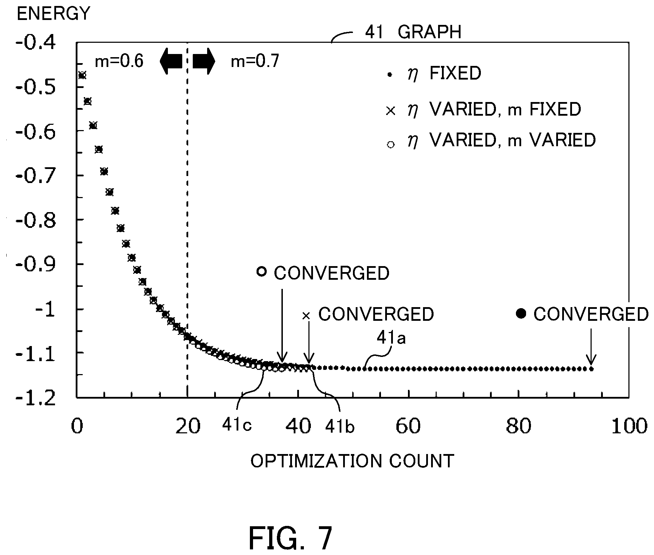

FIG. 7 illustrates an example of VQE computation of energy of a hydrogen molecule. In FIG. 7, a graph 41 represents results of calculating the energy of the hydrogen molecule ($H_2$) by VQE when the interatomic distance is 0.7Å.

In the graph 41, the horizontal axis represents the values indicating how many times the optimization process has been performed (the optimization count), and the vertical axis represents the energy values. In the graph 41, black circles indicate changes in energy when the step size $\eta$ is a fixed value. Cross marks indicate changes in energy when the step size $\eta$ is varied and the parameter m is set to a fixed value. White circles indicate changes in energy when the step size $\eta$ and the parameter m are varied.

According to the example of FIG. 7, the initial value of the step size $\eta$ is "0.05" for both fixed and varied step sizes. When the step size $\eta$ is fixed, the step size $\eta$ remains "0.05" throughout the VQE computation. When the step size $\eta$ is dynamically varied and the parameter m is fixed, the parameter m is "0.6" throughout the VQE computation. When both the step size $\eta$ and the parameter m are varied, the value of the parameter m is "0.6" until the optimization count is 20, and is "0.7" thereafter.

In all cases of the VQE computation, the energy calculated in one optimization process decreases as the number of repetitions of the optimization process increases. The rate of decrease in energy is faster when the value of the step size $\eta$ is dynamically varied than when the step size $\eta$ is set to a fixed value. As a result, when a fixed value is used as the step

size $\eta$, the optimization count when the energy has converged is "93". When the value of the step size $\eta$ is dynamically varied, the optimization count when the energy has converged is "42". By dynamically changing the step size $\eta$ in this way, the energy converges with a smaller optimization count than when the step size $\eta$ is fixed.

Further, by varying the parameter m, the energy reduction speed is increased after the value of the parameter m is changed to "0.7". Note that the value of the parameter m is changed to "0.7" after the optimization count reaches "20". When the optimization count has reached "20", the amount of change in energy for each step of the optimization count is small. Therefore, even if the value of the parameter m is increased after the optimization count reaches "20", the energy does not greatly deviate from the transition progression, and is converging at a high speed. As a result, when values of the step size $\eta$ and the parameter m are both varied, the optimization count when the energy has converged is "37".

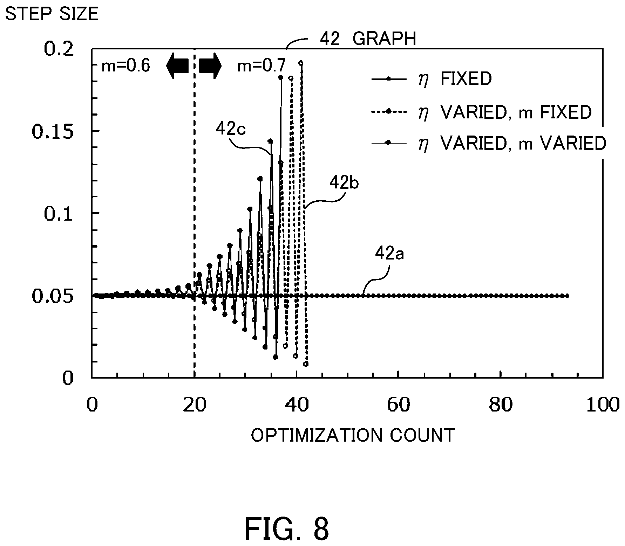

FIG. 8 illustrates an example of changes of the step size. In a graph 42 illustrated in FIG. 8, the horizontal axis represents the optimization count, and the vertical axis represents the step size $\eta$. In the graph 42, a polygonal line 42a indicates changes in the step size $\eta$ when the step size $\eta$ is a fixed value. A polygonal line 42b indicates changes in the step size $\eta$ when the step size $\eta$ is varied and the parameter m is fixed. A polygonal line 42c indicates changes in the step size $\eta$ when both the step size $\eta$ and the parameter m are varied.

According to the example of FIG. 8, the initial value of the step size $\eta$ is "0.05" for both fixed and varied step sizes. When the step size $\eta$ is fixed, the step size $\eta$ remains "0.05" throughout the VQE computation.

When the step size $\eta$ is dynamically varied and the parameter m is fixed, the parameter m is "0.6" throughout the VQE computation. As the step size $\eta$, a value larger than the initial value and a value smaller than the initial value are alternately repeated every time the optimization count increases by 1. As the optimization count increases, the step size $\eta$ increasingly has a larger difference from the initial value. That is, the variation amplitude of the step size $\eta$ increases as the optimization count increases.

Here, the reason why the step size $\eta$ periodically changes is described. The amount of change in the parameters $\theta$ in the k-th optimization process is given by the average value "$D_k$" in Equation (4). In Equation (3) for obtaining the value of the step size of the next optimization process "$\eta_k$", the average value "$D_k$" is the denominator in the parentheses of the portion of $(D_0/D_k)^m$, and thus the value "$\eta_k$" of the step size $\eta$ decreases as the average value "$D_k$" increases. That is, as the amount of change in the parameters $\theta$ increases, the value of the step size of the next optimization process "$\eta_k$" decreases. The decrease in the value "$\eta_k$" of the step size $\eta$ leads to a decrease in the amount of change of the parameters $\theta$ (average value "$D_k$"). Then, the value "$\eta_k$" of the step size $\eta$ obtained by Equation (3) increases, and the amount of change in the parameters $\theta$ increases. In this manner, the case where the step size $\eta$ is small and the case where the step size $\eta$ is large are alternately repeated.

When both the step size $\eta$ and the parameter m are varied, the value of the parameter m is "0.6" until the optimization count is 20, and is "0.7" thereafter. Therefore, when the optimization count exceeds 20, the variation amplitude of the step size $\eta$ becomes larger than that in the case where the parameter m is fixed to "0.6". As the variation amplitude of the step size $\eta$ increases, energy convergence is accelerated.

Third Embodiment

In a third embodiment, the optimization calculating unit 120 determines the value of the parameter m used in each step of parameter optimization in advance, and performs optimization while changing the value of the parameter m according to the schedule. In this case, the optimization calculating unit 120 does not use the threshold $\Delta\varepsilon$ of the amount of change in energy, which is used to determine a step of changing the value of the parameter **m.** Instead, the optimization calculating unit 120 determines (schedules) the value of the parameter m used in each step (or step width) in advance. This method is effective, for example, in a case where it is desired to further accelerate convergence when a convergence state of energy of a system to be calculated is known to some extent and a case where it is desired to perform parameter optimization calculation on a plurality of different systems in the same schedule.

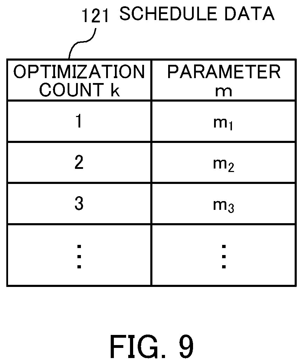

FIG. 9 illustrates an example of a change schedule of the parameter m. For example, the optimization calculating unit 120 includes schedule data 121. In the schedule data 121, each value of the optimization count k indicating an ordinal number of an optimization processing step is mapped to a value of the parameter m to be applied in the step. The schedule data 121 is stored, for example, in an area managed by the optimization calculating unit 120 in the memory 102.

Next, a procedure of the VQE computation in the third embodiment is described in detail.

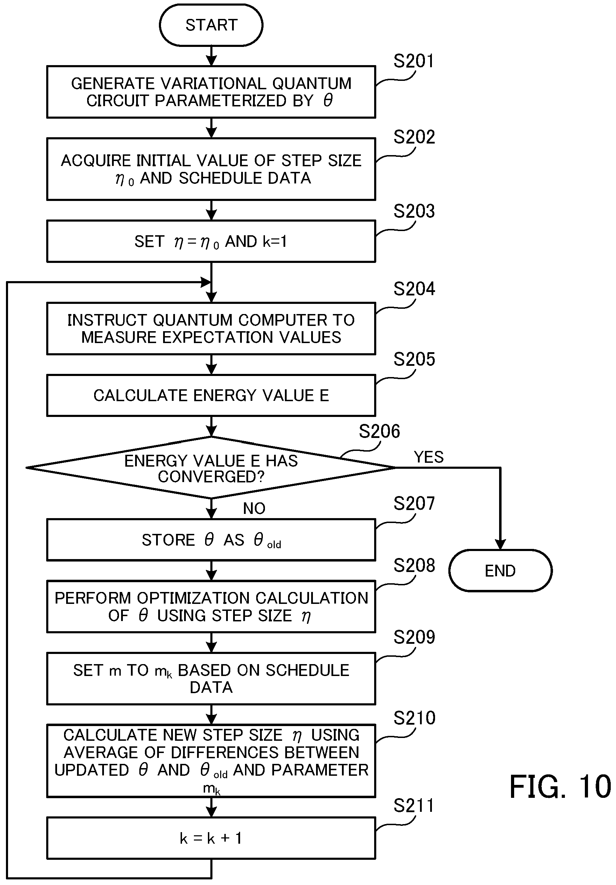

FIG. 10 is a flowchart illustrating a procedure of VQE computation according to the third embodiment. Hereinafter, the process illustrated in FIG. 10 is described in order of step numbers.

[Step S201] The quantum computation managing unit 110 generates a variational quantum circuit parameterized by the set of a plurality of parameters (parameters $\theta = \{\theta_1, \theta_2, \cdots\}$).

[Step S202] The quantum computation managing unit 110 acquires the initial value $\eta_0$ of the step size $\eta$ used in parameter optimization. The quantum computation managing unit 110 acquires the schedule data 121 of the value of the parameter m. The quantum computation managing unit 110 transmits the acquired schedule data 121 to the optimization calculating unit 120. The optimization calculating unit 120 stores the schedule data 121.

[Step S203] The quantum computation managing unit 110 sets the step size $\eta$ to the initial value $\eta_0$. Further, the quantum computation managing unit 110 sets the optimization count k indicating an ordinal number of the optimization process to an initial value "1".

[Step S204] The quantum computation managing unit 110 instructs the quantum computer 200 to measure expectation values. For example, the quantum computation managing unit 110 transmits the generated variational quantum circuit and the value of the parameters $\theta$ to the quantum computer 200, and instructs the quantum computer 200 to calculate the expectation value of each qubit based on the variational quantum circuit. The quantum computer 200 measures the expectation values of the qubits based on the variational quantum circuit parameterized by the set of a plurality of parameters $\theta$.

[Step S205] The quantum computation managing unit 110 calculates energy. For example, the quantum computation managing unit 110 calculates a value of a cost function $f(\theta)$ representing energy, and sets calculation results as the energy value E.

[Step S206] The quantum computation managing unit 110 determines whether the energy value E has converged. When the energy value E satisfies a predetermined convergence condition, the quantum computation managing unit 110 determines that the energy value has converged. When the energy has converged, the quantum computation managing unit 110 outputs a solution corresponding to the states of the qubits at that time, and ends the VQE computation process. If the energy has not converged, the quantum computation managing unit 110 advances the process to step S207.

[Step S207] The quantum computation managing unit 110 stores the set of a plurality of parameters $\theta$ as $\theta_{old}$ in the memory 102.

[Step S208] The optimization calculating unit 120 performs optimization calculation of the set of a plurality of parameters $\theta$ using the previously calculated step size $\eta$. In the first optimization calculation process, the optimization calculating unit 120 uses the predefined initial value $\eta_0$ of the predefined step size $\eta$ as the step size $\eta$ to be applied. The optimization calculating unit 120 updates the values of the set of a plurality of parameters $\theta$ to the values calculated by the optimization calculation.

[Step S209] The optimization calculating unit 120 sets the parameter m to a value "$m_k$" corresponding to the k-th optimization process based on the schedule data 121.

[Step S210] The optimization calculating unit 120 calculates a new step size $\eta$ based on the average value of the differences between the updated set of a plurality of parameters $\theta$ and $\theta_{old}$ and the value "$m_k$" of the parameter m. The calculated step size $\eta$ is used in the next optimization calculation.

[Step S211] The optimization calculating unit 120 adds 1 to the optimization count k (k = k+1). Thereafter, the optimization calculating unit 120 advances the process to step S204.

By performing the above VQE computation process, the classical computer 100 is able to dynamically change the step size $\eta$ for each optimization calculation and accelerate convergence of the energy. In addition, an appropriate parameter m may be set for each step of the optimization calculation using the schedule data 121, and an optimal step size $\eta$ for each step may be determined in a case where the energy convergence progression is predictable. As a result, convergence of the energy is accelerated.

Fourth Embodiment

In a fourth embodiment, the optimization calculating unit 120 determines whether a changed value of the parameter m is appropriate, and corrects the value of the parameter m to a smaller value when the changed value of the parameter m is inappropriate. This prevents the energy from not converging due to the changed value of the parameter m being too large.

Assume that the optimization calculating unit 120 changes the value of the parameter m, for example, from "$m_1$" to "$m_2$" during optimization and then continues the optimization. At this time, if the value of "$m_2$" after the change is too large, the value of the parameters $\theta$ changes too much, which may deviate an optimization path to be originally traced, and there is therefore a possibility that the optimization is not successfully performed in the subsequent steps. In view of this, the optimization calculating unit 120 detects deviation from the optimization path and corrects the value of the parameter m to continue the optimization.

The optimization calculating unit 120 performs, for example, the following processing in order to detect deviation from the optimization path. When the value of the energy in the step of the optimization calculation after changing the value of the parameter m to "$m_2$" increases rapidly compared to the energy value in the previous step, the optimization calculating unit 120 determines that there is deviation from the optimization path. The case where the energy value rapidly increases is, for example, when the energy difference becomes equal to or more than a constant value "$\Delta e$".

When the energy value deviates from the optimization path, the optimization calculating unit 120 resets the parameter m to a new value "$m_3$" that is larger than "$m_1$" but smaller than "$m_2$" ($m_2 > m_3 > m_1$) and continues the optimization.

According to this method, even when there is deviation from the optimization path due to an increase in the value of the parameter m, the classical computer 100 is able to continue optimization from a state before the deviation and accelerate convergence of the energy.

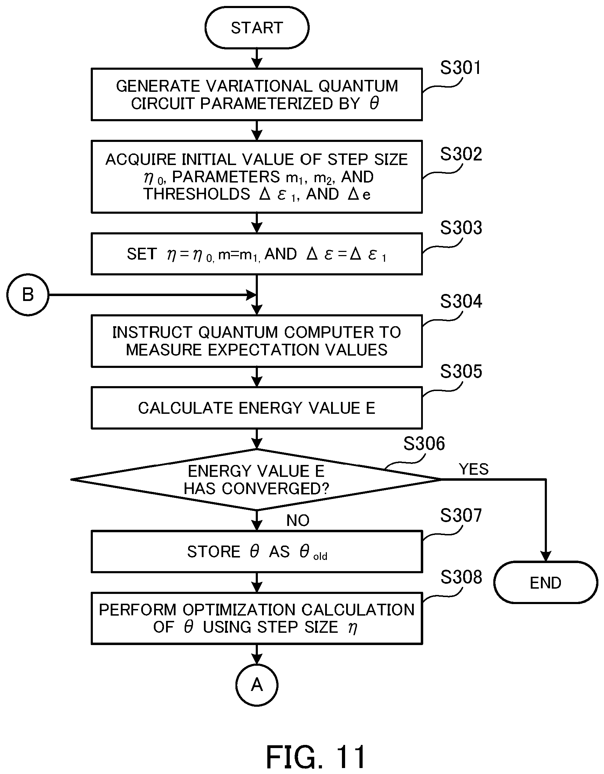

FIG. 11 is a first half of a flowchart illustrating a procedure of VQE computation according to the fourth embodiment. Steps S301 and S303 to S308 of FIG. 11 are the same as steps S101 and S103 to S108 of the second embodiment depicted in FIG. 6. The process of step S302 is as follows.

[Step S302] After executing step S301, the quantum computation managing unit 110 acquires the initial value $\eta_0$ of the step size $\eta$ used for parameter optimization. The quantum computation managing unit 110 also acquires the values "$m_1$ and $m_2$" of the parameter m for controlling the magnitude of the amplitude of the step size $\eta$, the threshold "$\Delta\varepsilon_1$", and the energy deviation threshold "$\Delta e$".

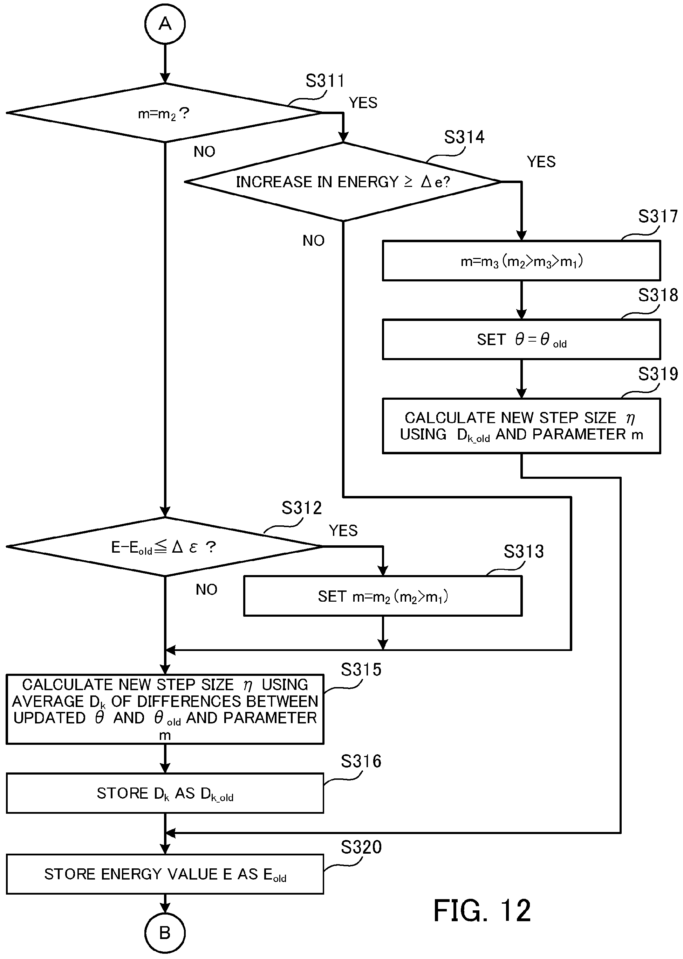

Thereafter, the quantum computation managing unit 110 executes steps S303 to S308, and advances the process to step S311 after step S308 (see FIG. 12).

FIG. 12 is a second half of the flowchart illustrating the procedure of the VQE computation according to the fourth embodiment. Hereinafter, the process illustrated in FIG. 12 is described in order of step numbers.

[Step S311] The optimization calculating unit 120 determines whether the value of the parameter m is "$m_2$". If "m = $m_2$", the optimization calculating unit 120 advances the process to step S314. If "m = $m_2$" is not satisfied, the optimization calculating unit 120 advances the process to step S312.

[Step S312] The optimization calculating unit 120 determines whether the difference between the energy value E and $E_{old}$ is equal to or less than the threshold $\Delta\varepsilon$ (E - $E_{old} \leq \Delta\varepsilon$). If the difference is equal to or smaller than the threshold $\Delta\varepsilon$, the optimization calculating unit 120 advances the process to step S313. If the difference is larger than the threshold $\Delta\varepsilon$, the optimization calculating unit 120 advances the process to step S315.

[Step S313] The optimization calculating unit 120 sets the parameter m to "$m_2$" where $m_2 > m_1$ (m = $m_2$). The optimization calculating unit 120 then advances the process to step S315.

[Step S314] The optimization calculating unit 120 determines whether the energy E of the current step has increased by "$\Delta e$" or more from the energy $E_{old}$ of the immediately preceding step (E - $E_{old} \geq \Delta e$). When the increase is equal to or greater than "$\Delta e$", the optimization calculating unit 120 advances the process to step S317. On the other hand, if the increase is not equal to or greater than "$\Delta e$", the optimization calculating unit 120 advances the process to step S315.

[Step S315] The optimization calculating unit 120 calculates a new step size $\eta$ based on the average value "$D_k$" of the differences between the parameters $\theta$ updated in step S308 and $\theta_{old}$ and the value of the parameter m. The calculated step size $\eta$ is used in the next optimization calculation.

[Step S316] The optimization calculating unit 120 stores "$D_k$" calculated in step S314 as "$D_{k\_old}$". The optimization calculating unit 120 then advances the process to step S320.

[Step S317] The optimization calculating unit 120 sets the parameter m to "$m_3$" ($m_2 > m_3 > m_1$).

[Step S318] The optimization calculating unit 120 sets $\theta_{old}$ to the value of the parameters $\theta$ updated in step S308.

[Step S319] The optimization calculating unit 120 calculates a new step size $\eta$ based on the average value "$D_{k\_old}$" of the differences related to the parameters $\theta$ stored in the previous optimization calculation and the value of the parameter m. The calculated step size $\eta$ is used in the next optimization calculation.

[Step S320] The optimization calculating unit 120 stores the energy value E as $E_{old}$. Thereafter, the optimization calculating unit 120 advances the process to step S304 (see FIG. 11).

As described above, when the energy value E increases by "$\Delta e$" or more after the value of the parameter m is changed to "$m_2$", the value of the parameter m is then changed to "$m_3$" which is smaller than "$m_2$" but larger than "$m_1$". Thus, when the energy deviates from the optimization path, the value of the parameter m is decreased. As a result, the subsequent step size $\eta$ is narrowed, which prevents the energy from deviating from the optimization path.

When the energy deviates from the optimization path, the value of the parameters $\theta$ is recalculated from the state before the deviation. This allows for convergence of the energy.

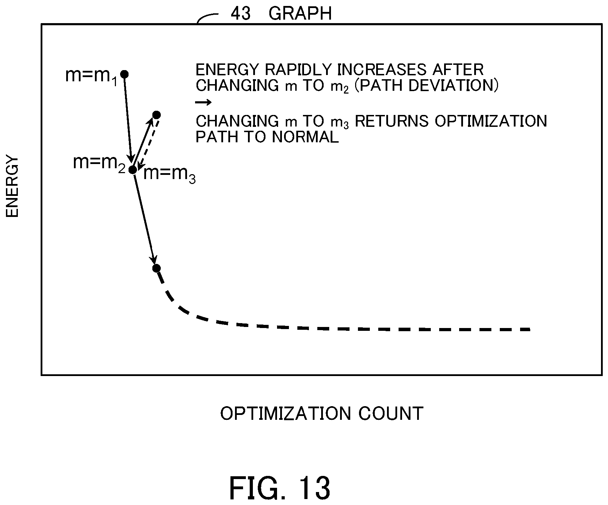

FIG. 13 illustrates an example of energy transition in a case where energy greatly deviates from an ideal transition progression. A graph 43 depicts transition of energy according to the optimization count. The horizontal axis of the graph 43 represents the optimization count, and the vertical axis represents the value of energy. In the initial stage of the VQE computation, the value of the parameter m is "$m_1$". The optimization of the parameters $\theta$ is repeated, and the energy is calculated each time, so that the energy gradually decreases. At this time, the amount of change in the energy may be equal to or less than the threshold value "$\Delta\varepsilon$" even though the energy is considerably away from the ground state value. Then, the value of the parameter m is changed to "$m_2$".

When the value of the parameter m is changed to "$m_2$", the step size $\eta$ increases, and the amount of change in the parameters $\theta$ also increases. Then, there is a possibility that the energy calculated according to the next updated parameters $\theta$ rapidly increases and greatly deviates from the ideal transition progression of the energy. If the energy greatly deviates from the ideal transition progression, there is a possibility that the energy does not converge even if the VQE computation is continued. Even if energy convergence occurs, the convergence takes more iterations of the optimization process.

Therefore, when the energy greatly deviates from the ideal transition progression, the optimization calculating unit 120 reduces the value of the parameter m to "$m_3$" to suppress the step size $\eta$ to be low, and redoes the optimization calculation of the parameters $\theta$ from the state of the immediately preceding optimization process. This allows the VQE computation to be continued from a state in which the energy does not greatly deviate from the ideal transition progression, and causes the energy to converge to the ground state energy at an early stage.

Other Embodiments

In the second embodiment, the value of the parameter m is changed only once in the optimization progression; however, the optimization calculating unit 120 may change the parameter m twice or more times. For example, the optimization calculating unit 120 may change the parameter m twice such that m = 0.6 in the first stage, m = 0.7 in the second stage, and m = 0.8 in the third stage. In this case, the optimization calculating unit 120 performs the change from the first stage to the second stage in a step where the amount of change in the energy becomes equal to or less than the predetermined threshold $\Delta\varepsilon_1$. The optimization calculating unit 120 performs the change from the second stage to the third stage in a step where the amount of change in the energy is equal to or less than a predetermined threshold $\Delta\varepsilon_2$. As described above, appropriately determining the values of the parameter m and the threshold values $\Delta\varepsilon_1$ and $\Delta\varepsilon_2$ in the individual stages promotes the effect of reducing the number of optimization iterations.

In the second embodiment, the amplitude of the periodic change of the step size $\eta$ is increased by changing the value of the parameter m, which is the exponent when the base number is "$D_0/D_k$" in a power function. However, the amplitude of the step size $\eta$ may be increased by another means. For example, the optimization calculating unit 120 may multiply "$D_0/D_k$" by a coefficient for adjusting the change amount of the step size $\eta$ while the value of the parameter m is fixed. This is expressed as "$\eta_k = A (D_0/D_k)^m \cdot \eta_0$" when the coefficient is "A" (A is a positive real number). For example, the initial value of the coefficient A is "1", and when "$E - E_{old} \leq \Delta\varepsilon$", the value of the coefficient A is changed to a value larger than "1".

The foregoing merely illustrates the principles of the invention. Further, many modifications and variations are possible for those skilled in the art, and the present invention is not limited to the exact construction and application examples shown and described above, and all corresponding modifications and equivalents are deemed to be within the scope of the present invention as defined by the appended claims and their equivalents.

Reference Signs List

1    variational quantum circuit
2    quantum computer
10   information processing apparatus
11   storing unit
12   processing unit

**Claims**

1. An information processing program that causes a computer to execute a plurality of update processes, in each of which a value of a first parameter that is applied to a variational quantum circuit used for variational quantum eigenvalue computation is updated, the plurality of update processes comprising:

    determining, for each of the plurality of update processes, a value of a second parameter used in the each of the plurality of update processes to be larger in (n+1)-th and subsequent update processes (n is a natural number) than in n-th and earlier update processes;
    determining, for the each of the plurality of update processes, a value of a third parameter used in the each of the plurality of update processes so as to periodically change between a value higher than a predetermined reference value and a value lower than the predetermined reference value with an increase in an update count that indicates an ordinal number of the each of the plurality of update processes among the plurality of update processes and have a greater amount of change as the value of the second parameter becomes larger; and
    updating the value of the first parameter to a value changed from the value of the first parameter before update by an amount of change corresponding to the value of the third parameter determined for the update count indicating the each of the plurality of update processes.

2. The information processing program according to claim **1,** wherein:

the determining of the value of the third parameter includes determining, as the value of the third parameter, a product obtained by multiplying a result of exponentiation by the predetermined reference value, the result of exponentiation being obtained by raising a numerical value, which becomes smaller as a change in the first parameter in the each of the plurality of update processes increases, to power of the value of the second parameter.

3. The information processing program according to claim **1,** wherein:
the determining of the value of the second parameter includes determining the value of the second parameter to be used in the (n+1)-th update process to be a value larger than the value of the second parameter used in the n-th update process upon an amount of change in an energy value from a previous time being equal to or less than a predetermined threshold, the energy value being obtained by the variational quantum eigenvalue computation to which the value of the first parameter updated in the n-th update process is applied.

4. The information processing program according to claim **1,** wherein:
the determining of the value of the second parameter includes determining, for the each of the plurality of update processes, the value of the second parameter according to the update count based on schedule data in which values of the second parameter are mapped to ordinal numbers indicated by the update count.

5. The information processing program according to claim **1,** wherein:
the determining of the value of the second parameter includes determining the value of the second parameter to be a value larger than the value of the second parameter used in the n-th and earlier update processes but smaller than the value of the second parameter used in the (n+1)-th and subsequent update processes upon an energy value having increased by a predetermined value or more from a previous time, the energy value being obtained by the variational quantum eigenvalue computation to which the value of the first parameter updated in each of the (n+1)-th and subsequent update processes is applied.

6. The information processing program according to claim **5,** wherein:
the determining of the value of the third parameter includes determining the value of the third parameter to be used in an (r+1)-th update process (r is an integer larger than n) based on the value of the first parameter updated in an (r-1)-th update process upon an energy value obtained by the variational quantum eigenvalue computation, to which the value of the first parameter updated in an r-th update process after the (n+1)-th update process is applied, having increased by a predetermined value or more from an energy value obtained by the variational quantum eigenvalue computation, to which the value of the first parameter updated in the (r-1)-th update process is applied.

7. An information processing method with a program that causes a computer to execute a plurality of update processes, in each of which a value of a first parameter that is applied to a variational quantum circuit used for variational quantum eigenvalue computation is updated, the information processing method comprising:

determining, for each of the plurality of update processes, a value of a second parameter used in the each of the plurality of update processes to be larger in (n+1)-th and subsequent update processes (n is a natural number) than in n-th and earlier update processes;
determining, for the each of the plurality of update processes, a value of a third parameter used in the each of the plurality of update processes so as to periodically change between a value higher than a predetermined reference value and a value lower than the predetermined reference value with an increase in an update count that indicates an ordinal number of the each of the plurality of update processes among the plurality of update processes and have a greater amount of change as the value of the second parameter becomes larger; and
updating the value of the first parameter to a value changed from the value of the first parameter before update by an amount of change corresponding to the value of the third parameter determined for the update count indicating the each of the plurality of update processes.

8. An information processing apparatus with a program that causes a computer to execute a plurality of update processes, in each of which a value of a first parameter that is applied to a variational quantum circuit used for variational quantum eigenvalue computation is updated, the information processing apparatus comprising:
a processing unit for executing a process including:

determining, for each of the plurality of update processes, a value of a second parameter used in the each of the plurality of update processes to be larger in (n+1)-th and subsequent update processes (n is a natural number) than in n-th and earlier update processes;
determining, for the each of the plurality of update processes, a value of a third parameter used in the each of the plurality of update processes so as to periodically change between a value higher than a predetermined reference value and a value lower than the predetermined reference value with an increase in an update count that indicates an ordinal number of the each of the plurality of update processes among the plurality of update processes and have a greater amount of change as the value of the second parameter becomes larger; and

updating the value of the first parameter to a value changed from the value of the first parameter before update by an amount of change corresponding to the value of the third parameter determined for the update count indicating the each of the plurality of update processes.

INFORMATION PROCESSING APPARATUS

**STORAGE UNIT** — 11

— 1

**VARIATIONAL QUANTUM CIRCUIT**

(PARAMETARIZED BY FIRST PARAMETER $\theta$)

— 12

PROCESSING UNIT

**DETERMINE VALUE OF THIRD PARAMETER $\eta$ (STEP SIZE)**

$$\eta_k = (D_0/D_k)^m \cdot \eta_0$$

$$D_k = \Sigma |\theta_{p,k} - \theta_{p,k-1}|/N$$

$\eta$

$m_1 \longleftrightarrow m_2$

0.05

$n$    OPTIMIZATION COUNT

REFER-ENCE VALUE ($\eta_0$)

**UPDATE VALUE OF FIRST PARAMETER $\theta$**

$$\theta_{p,k+1} = \theta_{p,k} - \eta_k \frac{\partial f(\theta)}{\partial \theta_p}$$

$f(\theta)$: COST FUNCTION

REPEATED

$m$

**DETERMINE VALUE OF SECOND PARAMETER m**

$E$

$m_1 \longleftrightarrow m_2(>m_1)$

$E - E_{old} \leq \Delta \varepsilon$

$n$    OPTIMIZATION COUNT

$E$ **CALCULATION OF ENERGY · DETERMINATION OF CONVERGENCE**

**MEASUREMENT OF EXPECTATION VALUE**

# FIG. 1

— 2

**QUANTUM COMPUTER**

100

200

CLASSICAL
COMPUTER

QUANTUM
COMPUTER

FIG. 2

**FIG. 3**

FIG. 4

100

CLASSICAL
COMPUTER

120

OPTIMIZATION
CALCULATING
UNIT

110

QUANTUM
COMPUTATION
MANAGING UNIT

200

QUANTUM
COMPUTER

FIG. 5

START

GENERATE VARIATIONAL QUANTUM CIRCUIT PARAMETERIZED BY $\theta$ — S101

ACQUIRE INITIAL VALUE OF STEP SIZE $\eta_0$, PARAMETERS $m_1$, $m_2$, AND THRESHOLD $\Delta\varepsilon_1$ — S102

SET $\eta=\eta_0$, $m=m_1$, AND $\Delta\varepsilon=\Delta\varepsilon_1$ — S103

INSTRUCT QUANTUM COMPUTER TO MEASURE EXPECTATION VALUES — S104

CALCULATE ENERGY VALUE E — S105

ENERGY VALUE E HAS CONVERGED? — S106   YES → END

NO

STORE $\theta$ AS $\theta_{old}$ — S107

PERFORM OPTIMIZATION CALCULATION OF $\theta$ USING STEP SIZE $\eta$ — S108

$E-E_{old}\leqq\Delta\varepsilon$ ? — S109   YES → SET $m=m_2$ $(m_2 > m_1)$ — S110

NO

CALCULATE NEW STEP SIZE $\eta$ USING AVERAGE OF DIFFERENCES BETWEEN UPDATED $\theta$ AND $\theta_{old}$ AND PARAMETER m — S111

STORE ENERGY VALUE E AS $E_{old}$ — S112

FIG. 6

FIG. 7

FIG. 8

121 SCHEDULE DATA

| OPTIMIZATION COUNT k | PARAMETER m |
|---|---|
| 1 | $m_1$ |
| 2 | $m_2$ |
| 3 | $m_3$ |
| ⋮ | ⋮ |

FIG. 9

START

GENERATE VARIATIONAL QUANTUM CIRCUIT PARAMETERIZED BY $\theta$ — S201

ACQUIRE INITIAL VALUE OF STEP SIZE $\eta_0$ AND SCHEDULE DATA — S202

SET $\eta = \eta_0$ AND k=1 — S203

INSTRUCT QUANTUM COMPUTER TO MEASURE EXPECTATION VALUES — S204

CALCULATE ENERGY VALUE E — S205

ENERGY VALUE E HAS CONVERGED? — S206

YES

NO

STORE $\theta$ AS $\theta_{old}$ — S207

END

PERFORM OPTIMIZATION CALCULATION OF $\theta$ USING STEP SIZE $\eta$ — S208

SET m TO $m_k$ BASED ON SCHEDULE DATA — S209

CALCULATE NEW STEP SIZE $\eta$ USING AVERAGE OF DIFFERENCES BETWEEN UPDATED $\theta$ AND $\theta_{old}$ AND PARAMETER $m_k$ — S210

k = k + 1 — S211

FIG. 10

START

GENERATE VARIATIONAL QUANTUM
CIRCUIT PARAMETERIZED BY $\theta$ — S301

ACQUIRE INITIAL VALUE OF STEP SIZE
$\eta_0$, PARAMETERS $m_1$, $m_2$, AND
THRESHOLDS $\Delta\varepsilon_1$, AND $\Delta e$ — S302

SET $\eta = \eta_0$, $m = m_1$, AND $\Delta\varepsilon = \Delta\varepsilon_1$ — S303

B

INSTRUCT QUANTUM COMPUTER TO
MEASURE EXPECTATION VALUES — S304

CALCULATE ENERGY VALUE E — S305

ENERGY VALUE E
HAS CONVERGED? — S306    YES

NO

STORE $\theta$ AS $\theta_{old}$ — S307

END

PERFORM OPTIMIZATION CALCULATION
OF $\theta$ USING STEP SIZE $\eta$ — S308

A

FIG. 11

FIG. 12

43  GRAPH

ENERGY RAPIDLY INCREASES AFTER
CHANGING m TO $m_2$ (PATH DEVIATION)
$\rightarrow$
CHANGING m TO $m_3$ RETURNS OPTIMIZATION
PATH TO NORMAL

$m=m_1$

$m=m_2$  $m=m_3$

ENERGY

OPTIMIZATION COUNT

FIG. 13

## INTERNATIONAL SEARCH REPORT

| International application No. |
|---|
| **PCT/JP2022/047324** |

**A. CLASSIFICATION OF SUBJECT MATTER**

$G06N\ 99/00$(2019.01)i; $G06N\ 10/60$(2022.01)i; $G06N\ 20/00$(2019.01)i
FI: G06N99/00 180; G06N20/00; G06N10/60

According to International Patent Classification (IPC) or to both national classification and IPC

**B. FIELDS SEARCHED**

Minimum documentation searched (classification system followed by classification symbols)

G06N 99/00; G06N 10/60; G06N 20/00; G06N 3/08

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | HUANG, Rui et al. Learning to Learn Variational Quantum Algorithm. IEEE Transactions on Neural Networks and Learning Systems [online]. February 2022, [retrieved on 13 March 2023], internet <URL: https://ieeexplore.ieee.org/document/9722571>, DOI: 10.1109/TNNLS.2022.3151127<br>    in particular, "IV. D. Adaptive Learning Rule" | 1-8 |
| A | SMITH, Leslie N. Cyclical Learning Rates for Training Neural Networks. arXiv [online]. April 2017, [retrieved on 13 March 2023], internet <URL: https://arxiv.org/abs/1506.01186v6>, 1506.01186v6<br>    in particular, "3.1. Cyclical Learning Rates" | 1-8 |

☐ Further documents are listed in the continuation of Box C.      ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **13 March 2023** | **20 March 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022529187 A
- US 20220188381
- US 20220171828